Europäisches Patentamt

European Patent Office

Office européen des brevets

(11) Veröffentlichungsnummer: **0 095 158**
A1

# (12) EUROPÄISCHE PATENTANMELDUNG

(21) Anmeldenummer: 83104996.0

(22) Anmeldetag: 20.05.83

(51) Int. Cl.³: **F 16 L 47/04**
**F 16 L 13/11**

(30) Priorität: 26.05.82 DE 3219702

(43) Veröffentlichungstag der Anmeldung:
30.11.83 Patentblatt 83/48

(84) Benannte Vertragsstaaten:
BE CH FR IT LI NL

(71) Anmelder: Gewerkschaft Keramchemie
Berggarten 1
D-5433 Siershahn(DE)

(72) Erfinder: Pospiech, Jochen, Ing.-grad.
Rehpfad 14
D-5413 Bendorf(DE)

(72) Erfinder: Schmidt, Erwin, Ing.-grad.
Bergstrasse 10
D-5433 Siershahn(DE)

(72) Erfinder: Wolf, Reinhard
Kirchweg 1
D-5419 Harschbach(DE)

(74) Vertreter: Kossobutzki, Walter
Waldstrasse 6
D-5419 Helferskirchen(DE)

(54) Vorrichtung zum Verbinden zweier Kunststoffrohre.

(57) Eine Vorrichtung zum Verbinden zweier Kunststoffrohre (6, 7) besteht aus einer zumindest den Endbereich eines der miteinander zu verbindenden Kunststoffrohre (6, 7) umschließenden Muffe (1) aus Kunststoff, die zumindest an diesem Ende mit Gewinde versehen und mittels einer Mutter (11) auf dem Kunststoffrohr (6, 7) gesichert ist.

Um bei der Verbindung glatter Kunststoffrohre große Kräfte aufnehmen bzw. übertragen zu können, weist die Muffe (1) an ihrem das Kunststoffrohr (6, 7) aufnehmenden Ende eine innere, umlaufende und Innengewinde tragende Aussparung (3) zur Aufnahme der mit Außengewinde versehenen Mutter (11) auf. Die Mutter (11) stützt sich an einem in einer flachen Nut (9) des Kunststoffrohres (6, 7) eingesetzten Widerlagerring (10) ab, und der in die Muffe (1) ragenden Stirnfläche des Kunststoffrohres (6, 7) ist mindestens eine Dichtung (8) zugeordnet und/oder zwischen dem Kunststoffrohr (6, 7) und der Muffe (1) ist Kleber oder Kitt vorgesehen.

RAP Koßobutzki-ne
1097

Gewerkschaft Keramchemie, Berggarten 1, 5433 Siershahn

Vorrichtung zum Verbinden zweier Kunststoffrohre

Die Erfindung bezieht sich auf eine Vorrichtung zum Verbinden zweier Kunststoffrohre, bestehend aus einer zumindest den Endbereich eines der miteinander zu verbindenden Kunststoffrohre umschließenden Muffe aus Kunststoff, die zumindest an diesem Ende mit Gewinde versehen und mittels einer Mutter auf dem Kunststoffrohr gesichert ist.

Aus der DE-OS 23 54 554 ist eine Kunststoff-Rohrverbindung bekannt, bei der der Endbereich eines Kunststoffrohres mit Außengewinde versehen ist. Der Endbereich des anderen Kunststoffrohres ist als Muffe ausgebildet und mit Innengewinde versehen. Dieses Kunststoffrohr kann unter Verwendung einer Dichtung auf das andere Kunststoffrohr aufgeschraubt werden. Zur Erzielung dieser Rohrverbindung muß immer ein Rohr gedreht werden. Dies ist insbesondere bei Kunststoffrohren mit großen Durchmesser und/oder mit großer Länge nachteilig. Darüber hinaus müssen die zu verbindenden Rohre an ihren Verbindungsenden werksseitig entsprechend ausgebildet werden. Auf Baustellen, wo die Rohre entsprechend den Gegebenheiten auf Länge zugeschnitten und anschließend miteinander verbunden werden müssen, ist eine solche Rohrverbindung nur schwer herstellbar.

Um den vorerwähnten Nachteil bei der Verbindung von Kunststoffrohren auf der Baustelle zu vermeiden, ist eine Rohrverbindung bekannt geworden, bei der die glatten, miteinander zu verbindenden Rohrenden einerseits mit einem Gewindering und andererseits mit einer Überwurfmutter versehen werden, wobei die Überwurfmutter durch einen Ring auf dem Rohrende gesichert ist. Sowohl der die Überwurfmutter sichernde Ring als auch der Gewindering sind durch Klebung auf den Rohrenden gehalten. Eine derartige Rohrverbindung kann nur geringe Kräfte aufnehmen und ist für Rohrdurchmesser von 200 mm und größer ungeeignet.

Aus der DE-OS 24 28 589 ist eine Schraubverbindung für elastische, halbsteife oder steife Rohre mit verformbarer Außenhaut, insbesondere für Rohre aus plastischem Material bekannt, bei der die beiden glatten, miteinander zu verbindenden Rohre in einen Rohrkörper eingesteckt werden, dessen Außenfläche an beiden Enden mit Gewinde zur Aufnahme von zwei Hutmuttern versehen ist. Zwischen den Hutmuttern und den Rohrenden ist jeweils eine konisch ausgebildete Unterlagscheibe eingesetzt, die beim Anziehen der Hutmutter eine Verspannung der Unterlagscheiben mit dem Rohrkörper und den Rohren bewirkt. Zusätzlich soll durch diese Unterlagscheibe die Dichtheit dieser Schraubverbindung hergestellt werden. Auch diese Verbindung hat den Nachteil, daß keine großen Kräfte aufgenommen bzw. übertragen werden können, und daß dieselbe für Rohre mit größerem Durchmesser ungeeignet ist.

Es ist ferner bekannt, zwei aus Kunststoff bestehende Rohre in der Weise miteinander zu verbinden, daß dieselben im Verbindungsbereich von einer Muffe unter Bildung eines Ringspaltes umgeben sind. Dabei wird der Spalt mit einem aushärtbaren Kleber oder Kitt ausgefüllt. Diese Rohrverbindung kann zwar nach der Aushärtung des Klebers bzw. Kittes große Kräfte übertragen und ist darüber hinaus auch für Rohre mit großem Durchmesser geeignet; sie hat jedoch den Nachteil, daß die Rohre während des Aushärtvorganges unbeweglich in ihrer Lage gehalten werden müssen. Dies ist auf Baustellen meist nicht möglich und verzögert darüber hinaus den Zeitaufwand für die Verlegung einer Rohrleitung.

Der Erfindung liegt deshalb die Aufgabe zugrunde, eine
Vorrichtung zum Verbinden zweier Kunststoffrohre zu
schaffen, die zur Verbindung glatter Kunststoffrohre eingesetzt werden und große Kräfte aufnehmen bzw. übertragen
kann.

Zur Lösung dieser Aufgabe wird bei einer Vorrichtung der
eingangs beschriebenen Gattung vorgeschlagen, daß die Muffe
an ihrem das Kunststoffrohr aufnehmenden Ende eine innere,
umlaufende und innengewindetragende Aussparung zur Aufnahme
der mit Außengewinde versehenen Mutter aufweist, daß sich
die Mutter an einem in einer flachen Nut des Kunststoffrohres eingesetzten Widerlagerring abstützt, und daß der in
die Muffe ragenden Stirnfläche des Kunststoffrohres mindestens eine Dichtung zugeordnet und/oder zwischen dem
Kunststoffrohr und der Muffe Kleber oder Kitt vorgesehen ist.
Mittels dieser Verbindungsvorrichtung können große Kräfte
übertragen werden, sie erfordert kein Drehen der Rohre und
ist auch bei Rohren mit größerem Durchmesser verwendbar.

Ein weiteres Merkmal dieser Vorrichtung ist in Anspruch 2
enthalten.

Die Erfindung wird nachfolgend anhand eines in einer Zeichnung
dargestellten Ausführungsbeispieles näher erläutert.

In dieser Zeichnung ist eine rohrförmige Muffe 1 gezeigt,
die beispielsweise aus einem faserverstärkten Kunststoff
gefertigt ist und in diesem Beispiel in ihrem inneren, mittleren Bereich einen umlaufenden Kragen besitzt. An ihren beiden Enden weist die Muffe 1 je eine innere, umlaufende Aussparung 3 auf, die in an sich bekannter, nicht dargestellter
Weise mit Innengewinde versehen sind. Die inneren Mantelflächen 4, 5 zwischen dem Kragen 2 und den Aussparungen 3
können konisch, sich nach außen erweiternd, ausgebildet
sein. In die Muffe 2 ist in diesem Ausführungsbeispiel von jeder Seite ein Kunststoffrohr 6, 7 mit zyl. Außenfläche eingesetzt, die hierüber je einen Dichtungsring 8 an einer Stirnfläche des Kragens 2 anliegen. Die Kunststoffrohre 6, 7 können aus faserverstärktem Werkstoff hergestellt sein und bedarfsweise mindestens zwei Schichten aus unterschiedlichen Kunststoffen aufweisen.

Die Kunststoffrohre 6, 7 weisen im Bereich der Aussparungen 3 der Muffe 1 eine umlaufende Nut auf, in die jeweils ein Widerlagerring 10 beispielsweise aus thermoplastischem Kunststoff eingesetzt ist. Die Nut 9 kann ohne Schwierigkeiten nach dem Ablängen der Rohre 6, 7 mittels eines einfachen Werkzeuges auf der Baustelle hergestellt werden. An jedem Widerlagerring 10 stützt sich eine Mutter 11 mit Außengewinde ab, wobei die Mutter 11 eine umlaufende Ausnehmung 12 zur Aufnahme des Widerlagerringes 10 besitzt. Das nicht gezeichnete Außengewinde arbeitet mit dem entsprechenden Innengewinde in den Aussparungen 3 der Muffe 1 zusammen. Durch das Einschrauben der Muttern 11 in die Muffe 1 wird eine feste Verbindung zwischen den beiden Kunststoffrohren 6, 7 erzielt.

Es ist vorteilhaft, zwischen den Kunststoffrohren 6, 7 und der Muffe 1 aushärtbaren Kleber oder Kitt vorzusehen. Dabei kann es zweckmäßig sein, wenn zwischen den Rohren 6, 7 und der Muffe 1 jeweils ein im Querschnitt keilförmiger Ringspalt 13 vorhanden ist, der hier durch die konischen Mantelflächen 4, 5 der Muffe 1 erzielt wird. Durch den Kleber oder Kitt wird die Dichtheit dieser Verbindung verbessert und eine noch größere Kraftübertragung ermöglicht. Die Schraubverbindung stellt sicher, daß während des Aushärtevorganges des Klebers oder Kittes zusätzlich die notwendige Ruhelage sichergestellt ist und die Rohrleitung weiter montiert werden kann. In Abhängigkeit von der geforderten Dichtheit dieser Verbindungsvorrichtung ist es möglich, die Kunststoffrohre 6, 7 ohne Dichtungsring 8 in die Muffe 1 einzusetzen. Die Dichtheit dieser Verbindung wird dann nur durch den Kleber bzw. Kitt erreicht. In Ergänzung des gezeichneten Ausführungsbeispieles ist es möglich, auch die äußeren Enden der Kunststoffrohre 6, 7 konisch auszubilden. In Abhängigkeit von der Genauigkeit der Bearbeitung kann dann der Kleber oder Kitt entfallen. Ferner ist es möglich, sowohl die Enden der Kunststoffrohre 6, 7 als auch die inneren Mantelflächen der Muffe 1 zylindrisch auszubilden.

RAP Koßobutzki-ne                    24.05.82
1097


Gewerkschaft Keramchemie, Berggarten 1, 5433 Siershahn


<u>Patentansprüche</u>

1. Vorrichtung zum Verbinden zweier Kunststoffrohre, bestehend aus einer zumindest den Endbereich eines der miteinander zu verbindenden Kunststoffrohre umschließenden Muffe aus Kunststoff, die zumindest an diesem Ende mit Gewinde versehen und mittels einer Mutter auf dem Kunststoffrohr gesichert ist, dadurch gekennzeichnet, daß die Muffe (1) an ihrem das Kunststoffrohr (6, 7) aufnehmenden Ende eine innere, umlaufende und innengewindetragende Aussparung (3) zur Aufnahme der mit Außengewinde versehenen Mutter (11) aufweist, daß sich die Mutter (11) an einem in einer flachen Nut (9) des Kunststoffrohres (6, 7) eingesetzten Widerlagerring (10) abstützt, und daß der in die Muffe (1) ragenden Stirnfläche des Kunststoffrohres (6, 7) mindestens eine Dichtung (8) zugeordnet und/oder zwischen dem Kunststoffrohr (6, 7) und der Muffe (1) Kleber oder Kitt vorgesehen ist.

2. Vorrichtung nach Anspruch 1,
   dadurch gekennzeichnet,
   daß die Mutter (11) eine innere, umlaufende Ausnehmung (12) zur Aufnahme des Widerlagerringes (10) aufweist.

| | EINSCHLÄGIGE DOKUMENTE | | EP 83104996.0 |
|---|---|---|---|
| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
| Y | CH - A - 545 937 (W. DUNKEL)<br>* Gesamt *<br>-- | 1 | F 16 L 47/04<br>F 16 L 13/11 |
| Y | US - A - 3 809 413 (BOISSERAND)<br>* Fig. 1,4; Spalte 3, 4. Absatz *<br>-- | 1 | |
| A | AT - B - 351 879 (ENDERMILL ANSTALT)<br>* Fig. 1,5 *<br>-- | 1 | |
| A | DE - A - 1 475 649 (DYNAMIT NOBEL AG)<br>* Fig. 1,2 *<br>-- | 1 | |
| P,A | EP - A1 - 0 067 264 (PABRECO S.A.)<br>* Fig. 4 *<br>---- | 1 | RECHERCHIERTE SACHGEBIETE (Int. Cl. ³)<br><br>F 16 L 47/00<br>F 16 L 13/00<br>F 16 L 21/00 |

Der vorliegende Recherchenbericht wurde für alle Patentansprüche erstellt.

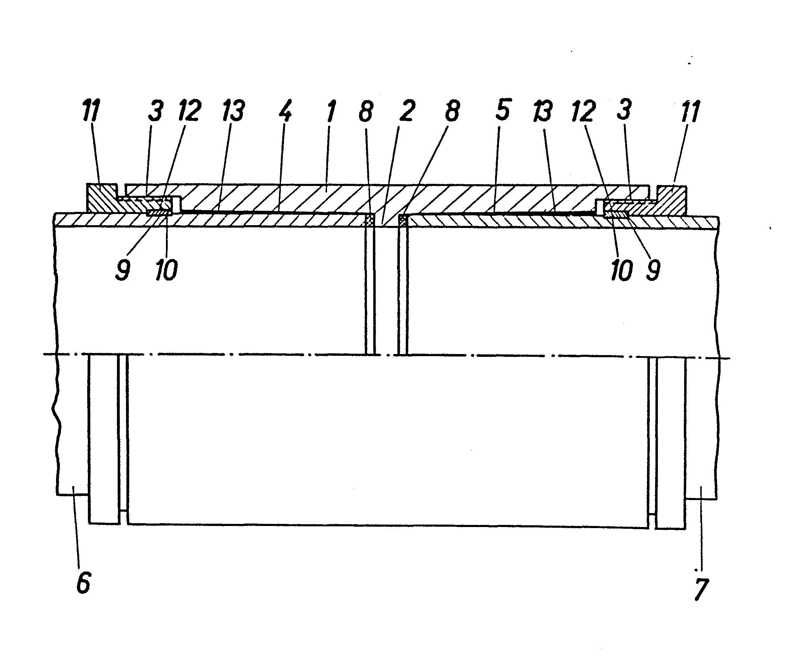

| Recherchenort<br>WIEN | Abschlußdatum der Recherche<br>28-07-1983 | Prüfer<br>SCHUGANICH |
|---|---|---|